# FASCICULE DE BREVET EUROPEEN

(11) **EP 4 377 562 B1**
(45) Date de publication et mention de la délivrance du brevet: **25.02.2026**
(21) Numéro de dépôt: 22731741.9
(22) Date de dépôt: 18.05.2022
(51) Int. Cl.: F02B 77/00, H01H 85/044, H01H 85/20, H01M 50/543, H01R 11/28, B60K 1/04

(54) **SYSTEME DE FIXATION D'UN CALCULATEUR MULTIFONCTION MOTEUR ET D'UN TERMINAL DE CONNEXION DE BATTERIE DE VEHICULE ELECTRIQUE**
SYSTEM ZUR BEFESTIGUNG EINES MEHRZWECK-MOTORCOMPUTERS UND EINER BATTERIEANSCHLUSSKLEMME EINES ELEKTROFAHRZEUGS
SYSTEM FOR FASTENING A MULTIPURPOSE ENGINE COMPUTER AND A BATTERY CONNECTION TERMINAL OF AN ELECTRIC VEHICLE

(30) Priorité: 29.07.2021 FR 2108257
(43) Date de publication de la demande: 05.06.2024
(73) Titulaire: Stellantis Auto SAS, 78300 Poissy (FR)
(72) Inventeur: ABOUFARIS, Ilham, Taujdate, 51100 (MA); MOKRANE, Chaimae, Casablanca, 20520 (MA); GOUJ, Saad, Casablanca, 20520 (MA)
(74) Mandataire: PSIP
(86) Numéro de dépôt international: PCT/FR2022/050943
(87) Numéro de publication internationale: WO 2023/007063

(56) Documents cités:
- WO-A1-2017/168399
- CN-U- 201 687 576
- CN-U- 206 719 136
- CN-U- 212 148 437
- JP-A- 2002 166 872
- JP-A- 2019 073 237
- US-A1- 2016 126 529
- US-B1- 10 218 130

## Description

L'invention se rapporte au domaine des assemblages de bloc avant de véhicule automobile à batterie de traction électrique, dans une zone de fixation de la batterie de traction. L'invention concerne plus précisément une conception d'un système de supports de fixation d'un calculateur multifonction moteur CMM et d'un terminal de connexion de batterie, en particulier du type terminal de fusible de batterie BFT (ou « battery fuse terminal » en langue anglaise) dans un environnement complexe.

Dans ce domaine, il y a un besoin croissant de fixer le calculateur multifonction moteur (calculateur CMM) dans une zone latérale du bloc avant du véhicule, à l'avant d'une batterie 12V ALD (dépôt de couches mince atomique ou « *atomic layer deposition* » en langue anglaise).

Ce type de configuration implique une architecture spécifique permettant de fixer en outre le terminal de connexion de batterie (terminal BFT) dans le bloc avant.

En référence aux techniques de montage usuelles, il y a en outre un besoin de monter en préparation le calculateur CMM sur un support de calculateur pour faciliter le montage sans avoir de démontage du support du calculateur vis-à-vis d'un support de terminal.

L'invention vise à proposer une nouvelle configuration de fixation de calculateur CMM et terminal BFT avec des supports de fixation spécifiques.

En outre, l'état de la technique est connu ldu document CN206719136U.

Pour atteindre cet objectif, l'invention propose un ensemble pour véhicule automobile comprenant un calculateur moteur, un terminal de connexion de batterie et un système de fixation du calculateur moteur et du terminal de connexion de batterie, ce système de fixation comprenant
- un support de calculateur configuré pour être fixé à un bloc support du véhicule automobile, et pour recevoir le calculateur moteur de sorte à fixer le calculateur moteur sur le support de calculateur ; et
- un support de terminal configuré pour être fixé au support de calculateur en maintenant le calculateur moteur entre le support de calculateur et le support de terminal, le support de terminal étant en outre configuré pour recevoir le terminal de connexion de batterie de sorte à fixer le terminal de connexion de batterie sur le support de terminal.

Avantageusement, un système de support de calculateur CMM et support de terminal BFT, en particulier en plastique, permet la fixation du calculateur CMM en préparation tout en garantissant le non désassemblage du calculateur CMM lors du montage dans la ligne de production. Le support de calculateur permet la fixation en « sandwich » du calculateur CMM avec le support de terminal sur un support de batterie par une seule fixation et permet aussi, dans une variante, un guidage pour fixer le support de terminal tout en garantissant la tenue vibratoire des supports. En outre, le support de calculateur permet de répondre aux contraintes d'implantation.

Selon une variante, le bloc support comprend un trou de coopération configuré pour coopérer avec une protubérance du support de calculateur de sorte à caler le support de calculateur sur le bloc support. Cela permet de faciliter le montage en calant ces deux structures support l'une vis-à-vis de l'autre.

Selon une variante, la protubérance du support de calculateur comporte un trou d'évacuation d'eau. Cela permet de protéger l'assemblage de détériorations par l'eau.

Selon une variante, le support de calculateur comprend un relief de guidage et le support de terminal comprend un trou de guidage configuré pour coopérer avec le relief de guidage pour guider le montage du support de terminal sur le support de calculateur. Cela permet de faciliter le montage en guidant l'assemblage des structures support.

Selon une variante, le support de calculateur comprend une lame d'encliquetage et le support de terminal comprend un premier trou d'encliquetage configuré pour coopérer par coopération de forme avec la lame d'encliquetage pour encliqueter le support de terminal avec le support de calculateur. Cela permet d'améliorer la cohésion des structures support l'une avec l'autre.

Par « *encliquetage ou clippage »* est entendu un mécanisme de fixation impliquant une déformation élastique d'au moins une structure coulissante, et le blocage de deux structures de coopération.

Selon une variante, le support de terminal comprend une patte d'encliquetage et le support de calculateur comprend un deuxième trou d'encliquetage configuré pour coopérer avec la patte d'encliquetage pour encliqueter le support de terminal avec le support de calculateur. Cela permet d'améliorer davantage la cohésion des structures support l'une avec l'autre.

Selon une variante, le support de terminal comprend un trou de fixation, et le support de calculateur comprend une encoche de fixation à disposer en regard du trou de fixation, le trou et l'encoche étant configurés pour être traversés par une structure de fixation pour fixer le support de calculateur et le support de terminal sur le bloc support. Cela permet de fixer solidement les structures support ensemble.

Selon une variante, le système de fixation comprend au moins une structure de protection de clip vis-à-vis de la patte d'encliquetage. Cela permet de protéger les structures mâles d'encliquetage lors de du transport des pièces correspondantes.

Selon une variante, le système de fixation comprend au moins un mur de renforcement autour d'une structure de fixation. Cela permet de protéger la structure de fixation correspondante pour empêcher la mise en place d'une pince crocodile.

L'invention porte également sur un véhicule automobile comprenant un système de fixation selon l'invention.

Un autre objet de l'invention concerne un procédé de montage d'un calculateur moteur et d'un terminal de connexion de batterie dans un véhicule automobile, comprenant les étapes suivantes
- fixer le calculateur moteur sur un support de calculateur et un support de terminal sur le support de calculateur en maintenant le calculateur moteur entre le support de calculateur et le support de terminal ;
- fixer l'ensemble sur un bloc support du véhicule automobile ;
- fixer ensuite le terminal de connexion de batterie sur le support de terminal.

L'invention sera davantage détaillée par la description de modes de réalisation non limitatifs, et sur la base des figures annexées illustrant des variantes de l'invention, dans lesquelles :

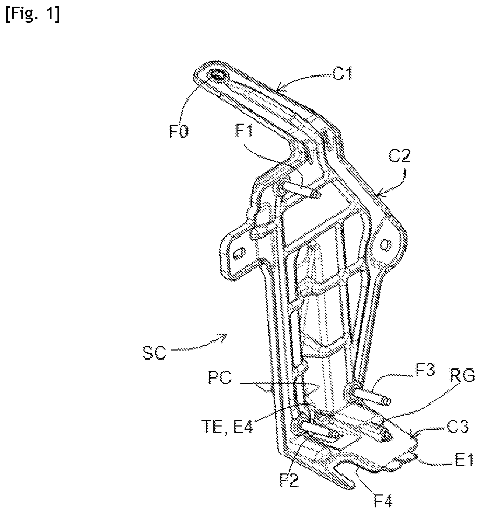

- - [Fig.1] illustre schématiquement une vue dans l'espace d'un support de calculateur moteur d'un système de fixation selon un mode de réalisation préféré ;

- [Fig.2] illustre schématiquement une vue dans l'espace d'un support de terminal du système de fixation selon le mode de réalisation préféré ;
- [Fig.3] illustre schématiquement une vue dans l'espace des supports des figures 1 et 2 assemblés avec un calculateur moteur ;

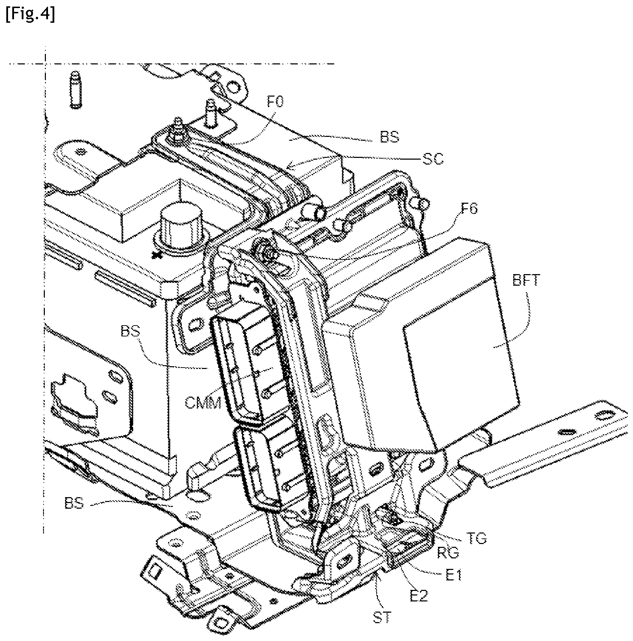

- [Fig.4] illustre schématiquement une vue dans l'espace d'un montage des supports et calculateur de la figure 3 sur un bloc support de véhicule automobile, ainsi qu'un montage d'un terminal de connexion de batterie sur le calculateur ;
- [Fig.5] illustre schématiquement une vue dans l'espace d'un assemblage d'une protubérance de support de calculateur sur un trou de coopération de bloc support ;
- [Fig.6] illustre schématiquement une vue dans l'espace du dessous de l'assemblage du support de terminal sur le support de calculateur ;
- [Fig.7] illustre schématiquement une vue dans l'espace de moyens d'encliquetage et de moyens de guidage du montage du support de terminal sur le support de calculateur ; et
- [Fig.8] illustre schématiquement une vue dans l'espace de structures de protection de moyens d'encliquetage mâles du support de terminal.

L'invention concerne un système de fixation d'un calculateur moteur CMM et d'un terminal de connexion de batterie BFT dans un véhicule automobile.

Le système de fixation comprend un support de calculateur SC pour le calculateur moteur CMM, et un support de terminal ST pour le terminal de connexion de batterie BFT.

Le support de calculateur SC est configuré pour être fixé à un bloc support BS du véhicule automobile, et pour recevoir le calculateur moteur CMM de sorte à fixer le calculateur moteur CMM sur le support de calculateur SC. Le bloc support BS peut être un support de batterie ALD dans un bloc avant de véhicule automobile.

En particulier, le support de calculateur SC a une forme de lame support en Z comprenant une branche de fixation supérieure C1 sensiblement horizontale orientée vers le bloc support BS, une lame intermédiaire C2 sensiblement verticale et une branche inférieure C3 sensiblement horizontale orientée de manière opposée à la branche supérieure. Le calculateur moteur CMM est configuré pour être disposé contre la lame intermédiaire C2, et pour reposer sur la branche inférieure C3.

La branche de fixation C1 comprend une première structure de fixation F0 recevant une vis ou un rivet pour fixer le support de calculateur SC sur le bloc support BS.

Le support de calculateur SC peut comporter des structures de fixation F1-F3 telles que des structures de vissage ou des rivets à faire pénétrer dans des structures correspondantes du calculateur moteur CMM. On peut prévoir une vis surmoulée proche de F1 et centrée, associée à un clip de fixation pour améliorer davantage la fixation.

Le support de terminal ST est configuré pour être fixé au support de calculateur SC en maintenant en sandwich le calculateur moteur CMM entre le support de calculateur SC et le support de terminal ST. Le support de terminal ST est en outre configuré pour recevoir le terminal de connexion de batterie BFT de sorte à fixer le terminal de connexion de batterie BFT sur le support de terminal ST.

En particulier, le support de terminal ST a également une forme de lame support en Z comprenant une branche de fixation supérieure T1 sensiblement oblique orientée vers le support de calculateur SC, une lame intermédiaire T2 sensiblement verticale et une branche inférieure T3 sensiblement horizontale orientée de manière opposée à la branche supérieure. Le calculateur moteur CMM est configuré pour être disposé entre les deux lames intermédiaires C2, T2, et le terminal de connexion de batterie BFT est configuré pour être disposé sur la lame intermédiaire T2 en regard du calculateur moteur CMM.

De préférence, le support de terminal ST comporte une languette L plus préférentiellement au milieu de la lame intermédiaire T2. La languette L permet d'avoir des propriétés antibruit et anti-fluage.

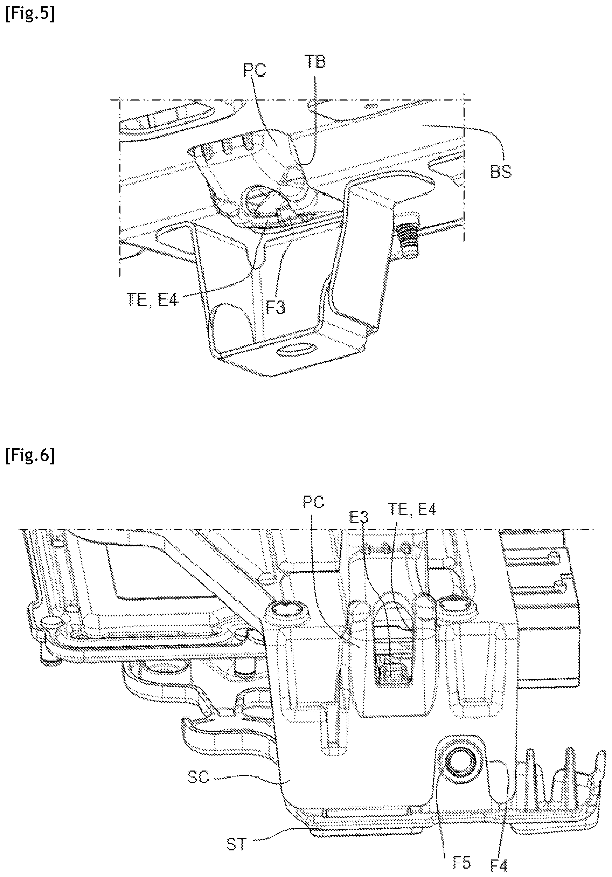

Dans le montage du support de calculateur SC sur le bloc support BS, on peut prévoir que le bloc support BS comporte un trou de coopération TB configuré pour coopérer avec une protubérance PC du support de calculateur SC de sorte à caler le support de calculateur SC sur le bloc support BS. Le trou de coopération TB et la protubérance PC sont visibles à la figure 5.

Dans la variante illustrée, la protubérance PC est disposée à la jonction de la lame intermédiaire C2 avec la branche inférieure C3. De préférence, la protubérance PC du support de calculateur SC comporte un trou d'évacuation d'eau TE, visible aux figures 5 et 6.

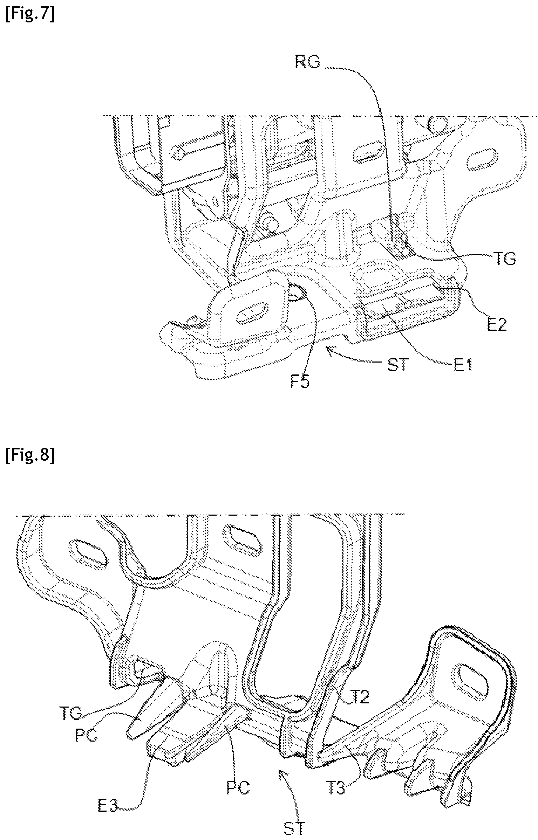

Dans la variante préférée, le support de calculateur SC comprend un relief de guidage RG et le support de terminal ST comprend un trou de guidage TG configuré pour coopérer avec le relief de guidage RG pour guider le montage du support de terminal ST sur le support de calculateur SC. Le relief de guidage RG et le trou de guidage TG sont visibles à la figure 7.

Dans la variante illustrée, le relief de guidage RG est disposé sur la branche inférieure C3. Le trou de guidage TG est disposé à la jonction de la lame intermédiaire T2 avec la branche inférieure T3.

De préférence, le support de calculateur SC comprend une lame d'encliquetage E1 et le support de terminal ST comprend un premier trou d'encliquetage E2 configuré pour coopérer par coopération de forme avec la lame d'encliquetage E1 pour encliqueter le support de terminal ST avec le support de calculateur SC. La structure de la lame E1 et du premier trou d'encliquetage E2 permet d'éviter le délogement du support de terminal ST du support de calculateur SC. La lame d'encliquetage E1 et le premier trou d'encliquetage E2 sont visibles à la figure 7.

Dans la variante illustrée, la lame d'encliquetage E1 est disposée au bord libre de la branche inférieure C3. Le premier trou d'encliquetage E2 est disposé sur la branche inférieure T3.

Selon une variante, le support de terminal ST comprend une patte d'encliquetage E3 et le support de calculateur SC comprend un deuxième trou d'encliquetage E4 configuré pour coopérer avec la patte d'encliquetage E3 pour encliqueter le support de terminal ST avec le support de calculateur SC. La patte d'encliquetage E3 et le deuxième trou d'encliquetage E4 sont visibles aux figures 5 et 6.

Dans la variante illustrée, le deuxième trou d'encliquetage E4 est disposé sur la protubérance PC et coïncide avec le trou d'évacuation d'eau TE.

Dans la variante préférée, le support de terminal ST comprend un trou de fixation F5, et le support de calculateur SC comprend une encoche de fixation F4 à disposer en regard du trou de fixation F5. Le trou F5 et l'encoche F4 sont configurés pour être traversés par une structure de fixation, telle qu'un moyen vissable ou un rivet, pour fixer le support de calculateur SC et le support de terminal ST sur le bloc support BS. Le trou de fixation F5, et l'encoche de fixation F4 sont visibles à la figure 6.

De préférence, le système de fixation comprend au moins une structure de protection de clip PC vis-à-vis d'au moins une des structures mâles d'encliquetage. Il s'agit en particulier la patte d'encliquetage E3 du support de terminal ST. Cela permet une protection de la patte d'encliquetage E3 pendant le transport du support de terminal ST. Des structures de protection de clip PC sont visibles à la figure 8.

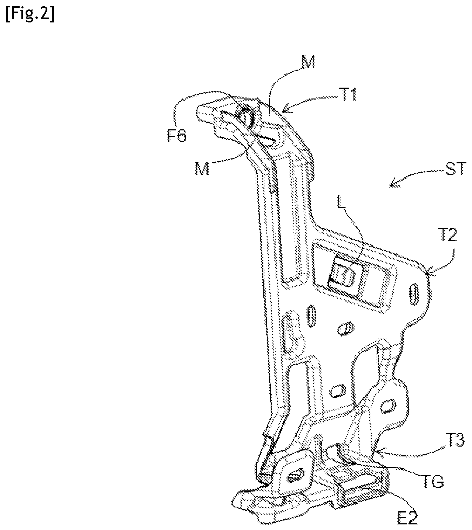

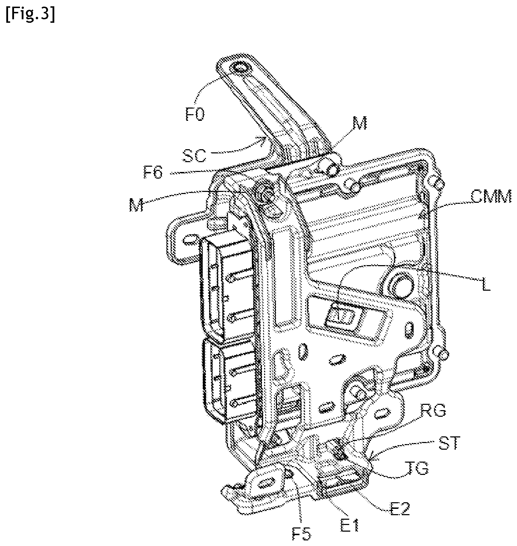

Dans une variante, le système de fixation comprend au moins un mur de renforcement M autour d'une structure de fixation. Il s'agit en particulier d'un mur de protection d'au moins une structure de fixation des supports SC, ST et du calculateur CMM, en particulier au moins les structures de fixation F1 (ici au niveau de la jonction entre la branche supérieure C1 et la lame intermédiaire du support de calculateur SC) et F6 (ici au niveau de la branche supérieure T1 du support de terminal ST). Cela permet d'empêcher la mise en place d'une pince crocodile. Le mur M est visible dans les figures 2 et 3.

L'invention concerne en outre un véhicule automobile comprenant un système de fixation tel que décrit précédemment.

Un autre objet de l'invention concerne un procédé de montage d'un calculateur moteur CMM et d'un terminal de connexion de batterie BFT dans un véhicule automobile. Il s'agit en particulier d'une fixation au moyen de supports SC, ST tels que décrit précédemment.

Le procédé comprend une étape pour fixer le calculateur moteur CMM en préparation sur un support de calculateur SC et un support de terminal ST sur le support de calculateur SC en maintenant en sandwich le calculateur moteur CMM entre le support de calculateur SC et le support de terminal ST.

Le procédé comprend ensuite une étape pour fixer l'ensemble sur un bloc support BS de véhicule automobile ;

Le procédé comprend en outre une étape pour fixer ensuite le terminal de connexion de batterie BFT sur le support de terminal ST.

## Revendications

1. Ensemble pour véhicule automobile comprenant un calculateur moteur (CMM), un terminal de connexion de batterie (BFT) et un système de fixation du calculateur moteur (CMM) et du terminal de connexion de batterie (BFT), le système de fixation comprenant
- un support de calculateur (SC) configuré pour être fixé à un bloc support (BS) du véhicule automobile, et pour recevoir le calculateur moteur (CMM) de sorte à fixer le calculateur moteur (CMM) sur le support de calculateur (SC) ; et
- un support de terminal (ST) configuré pour être fixé au support de calculateur (SC) en maintenant le calculateur moteur (CMM) entre le support de calculateur (SC) et le support de terminal (ST), le support de terminal (ST) étant en outre configuré pour recevoir le terminal de connexion de batterie (BFT) de sorte à fixer le terminal de connexion de batterie (BFT) sur le support de terminal (ST).

2. Ensemble selon la revendication 1, **caractérisé en ce que** le bloc support (BS) comprend un trou de coopération (TB) configuré pour coopérer avec une protubérance (PC) du support de calculateur (SC) de sorte à caler le support de calculateur (SC) sur le bloc support (BS).

3. Ensemble selon la revendication 2, **caractérisé en ce que** la protubérance (PC) du support de calculateur (SC) comporte un trou d'évacuation d'eau (TE).

4. Ensemble selon l'une quelconque des revendications 1 à 3, **caractérisé en ce que** le support de calculateur (SC) comprend un relief de guidage (RG) et le support de terminal (ST) comprend un trou de guidage (TG) configuré pour coopérer avec le relief de guidage (RG) pour guider le montage du support de terminal (ST) sur le support de calculateur (SC).

5. Ensemble selon l'une quelconque des revendications 1 à 4, **caractérisé en ce que** le support de calculateur (SC) comprend une lame d'encliquetage (E1) et le support de terminal (ST) comprend un premier trou d'encliquetage (E2) configuré pour coopérer par coopération de forme avec la lame d'encliquetage (E1) pour encliqueter le support de terminal (ST) avec le support de calculateur (SC).

6. Ensemble selon l'une quelconque des revendications 1 à 5, **caractérisé en ce que** le support de terminal (ST) comprend une patte d'encliquetage (E3) et le support de calculateur (SC) comprend un deuxième trou d'encliquetage (E4) configuré pour coopérer avec la patte d'encliquetage (E3) pour encliqueter le support de terminal (ST) avec le support de calculateur (SC).

7. Ensemble selon la revendication 6, **caractérisé en ce que** le système de fixation comprend au moins une structure de protection de clip (PC) vis-à-vis de la patte d'encliquetage (E3).

8. Ensemble selon l'une quelconque des revendications 1 à 7, **caractérisé en ce que** le support de terminal (ST) comprend un trou de fixation (F5), et le support de calculateur (SC) comprend une encoche de fixation (F4) à disposer en regard du trou de fixation (F5), le trou (F5) et l'encoche (F4) étant configurés pour être traversés par une structure de fixation pour fixer le support de calculateur (SC) et le support de terminal (ST) sur le bloc support (BS).

9. Véhicule automobile comprenant un ensemble selon l'une quelconque des revendications 1 à 8.

10. Procédé de montage d'un calculateur moteur (CMM) et d'un terminal de connexion de batterie (BFT) dans un véhicule automobile, comprenant les étapes suivantes
- fixer le calculateur moteur (CMM) sur un support de calculateur (SC) et un support de terminal (ST) sur le support de calculateur (SC) en maintenant le calculateur moteur (CMM) entre le support de calculateur (SC) et le support de terminal (ST) ;
- fixer l'ensemble sur un bloc support (BS) du véhicule automobile ;
- fixer ensuite le terminal de connexion de batterie (BFT) sur le support de terminal (ST).

## Patentansprüche

1. Kraftfahrzeugbaugruppe mit einem Motorrechner (CMM), einem Batterieanschlussendgerät (BFT) und einem Befestigungssystem für den Motorrechner (CMM) und das Batterieanschlussendgerät (BFT), wobei das Befestigungssystem
- einen Rechnerhalter (SC) umfasst, der so konfiguriert ist, dass er an einem Trägerblock (BS) des Kraftfahrzeugs befestigt ist, und den Motorrechner aufnimmt (CMM), um den Motorrechner (CMM) am Rechnerträger (SC) zu befestigen; Und
- ein Endgerätehalter (ST), der so konfiguriert ist, dass er an dem Computermedium (SC) befestigt wird, indem der Motorrechner (CMM) zwischen dem Computermedium (SC) und dem Endgerätmedium (ST) gehalten wird, wobei der Endgerätehalter (ST) so konfiguriert ist, dass er das Batterieanschlussendgerät (BFT) aufnimmt BFT) auf dem Endgeräteträger (ST).

2. Anordnung nach Anspruch 1, **dadurch gekennzeichnet, dass** der Trägerblock (BS) ein Eingriffsloch (TB) aufweist, das so konfiguriert ist, dass es mit einem Vorsprung (PC) des Computerträgers (SC) zusammenwirkt, um den Computerträger (SC) auf dem Trägerblock (BS) zu befestigen.

3. Anordnung nach Anspruch 2, **dadurch gekennzeichnet, dass** der Vorsprung (PC) des Rechnerträgers (SC) ein Wasserablassloch (TE) aufweist.

4. Anordnung nach einem der Ansprüche 1 bis 3, **dadurch gekennzeichnet, dass** der Rechnerträger (SC) ein Führungsrelief (RG) umfasst und der Endgerätträger (ST) ein Führungsloch (TG) umfasst, das so konfiguriert ist, dass es mit dem Führungsrelief (RG) zusammenwirkt, um die Montage des Endgerätträgers (ST) auf dem Rechnerträger (SC) zu führen.

5. Anordnung nach einem der Ansprüche 1 bis 4, **dadurch gekennzeichnet, dass** der Rechnerträger (SC) eine Rastklinge (E1) aufweist und der Endgerätträger (ST) eine erste Rastbohrung (E2) aufweist, die so ausgebildet ist, dass sie formschlüssig mit der Rastklinge (E1) zusammenwirkt, um den Endgerätträger (ST) mit dem Rechnerträger (SC zu verrasten (1)

6. Anordnung nach einem der Ansprüche 1 bis 5, **dadurch gekennzeichnet, dass** der Endgeräteträger (ST) eine Rastlasche (E3) aufweist und der Rechnerträger (SC) eine zweite Rastbohrung (E4) aufweist, die so ausgebildet ist, dass sie mit der Rastlasche (E3) zusammenwirkt, um den Endgeräteträger (ST) mit dem Rechnerträger (SC) zu verrasten.

7. Anordnung nach Anspruch 6, **dadurch gekennzeichnet, dass** das Befestigungssystem mindestens eine Clipschutzstruktur (PC) gegenüber der Rastnase (E3) aufweist.

8. Anordnung nach einem der Ansprüche 1 bis 7, **dadurch gekennzeichnet, dass** der Endgeräteträger (ST) ein Befestigungsloch (F5) aufweist und der Rechnerträger (SC) eine Befestigungskerbe (F4) aufweist, die gegenüber dem Befestigungsloch (F5) anzuordnen ist, wobei das Loch (F5) und die Kerbe (F4) so ausgebildet sind, dass sie von einer Struktur durchgriffen werden Befestigungsmittel zur Befestigung des Rechnerträgers (SC) und des Endgeräteträgers (ST) am Trägerblock (BS).

9. Kraftfahrzeug, das eine Anordnung nach einem der Ansprüche 1 bis 8 umfasst.

10. Verfahren zum Montieren eines Motorrechners (CMM) und eines Batterieanschlussendgerätes (BFT) in einem Kraftfahrzeug mit den folgenden Schritten
- Befestigen des Motorrechners (CMM) an einem Rechnerträger (SC) und eines Endgeräteträgers (ST) an dem Rechnerträger (SC), wobei der Motorrechner (CMM) zwischen dem Träger gehalten wird Rechner (SC) und Endgeräteträger (ST);
- Befestigen der Baugruppe an einem Trägerblock (BS) des Kraftfahrzeugs;
- Befestigen des Batterieanschlussendgerätes (BFT) an dem Endgeräteträger (ST).

## Claims

1. Set for motor vehicles including an engine calculator (CMM), a battery connection terminal (BFT) and a motor calculator (CMM) and battery connection terminal (BFT) attachment system, including
- a computer support (SC) configured to be attached to a support block (BS) of the motor vehicle, and to receive the motor calculator (CMM) so as to secure the engine calculator (SC) CMM) on the computer carrier (SC); and
- a terminal support (ST) configured to be attached to the computer support (SC) by maintaining the engine calculator (CMM) between the computer support (SC) and the terminal support (ST), and the terminal support (ST) being configured to receive the battery connection terminal (BFT) so that the battery connection terminal (BFT) is attached to the terminal support (ST).

2. Together according to Claim 1, characterized that the support block (BS) includes a cooperation hole (TB) configured to cooperate with a protuberance (PC) of the computer support (SC) so as to place the computer support (SC) on the support block (BS).

3. Together according to Claim 2, characterized as the protuberance (PC) of the computer carrier (SC) has a water drain (TE) hole.

4. Together according to any of the claims 1 to 3, characterized as the computer support (SC) includes a guidance relief (RG) and the terminal support (ST) includes a guidance hole (TG) configured to cooperate with the guidance relief (RG) to guide the mounting of the terminal support (ST) on the computer support (SC).

5. Together according to any of the claims 1 to 4, characterized that the calculator support (SC) includes a plug blade (E1) and the terminal support (ST) includes a first plug hole (E2) configured to cooperate in form with the plug blade (E1) to insert the terminal support (ST) with the calculator support (SC).

6. Together according to any of the claims 1 to 5, characterized that the terminal bracket (ST) includes a connector tab (E3) and the computer bracket (SC) includes a second connector hole (E4) configured to cooperate with the connector tab (E3) to insert the terminal bracket (ST) with the computer bracket (SC).

7. Together in accordance with Claim 6, **characterized by** the fact that the fastening system includes at least one clip protection structure (PC) vis-à-vis the insert tab (E3).

8. Together according to any of the claims 1 to 7, characterized as the terminal support (ST) includes a fixing hole (F5), and the computer support (SC) includes a fixing notch (F4) to be placed next to the fixing hole (F5), the hole (F5) and the notch (F4) being configured to be crossed by a fixing structure to secure the fixing bracket (F5) SC) and terminal support (ST) on support block (BS).

9. Motor vehicle comprising a set according to any of the claims 1 to 8.

10. Assembly of an engine calculator (CMM) and battery connection terminal (BFT) in a motor vehicle, including the following steps
- attach the engine calculator (CMM) to a computer support (SC) and terminal support (ST) to the computer support (SC) by maintaining the engine calculator (CMM) between the computer support (SC) and the terminal support (ST);
- fix the assembly on a support block (BS) of the motor vehicle;
- then fix the battery connection terminal (BFT) on the terminal support (ST).
